# EUROPÄISCHE PATENTSCHRIFT

(11) **EP 3 540 475 B1**
(45) Veröffentlichungstag und Bekanntmachung des Hinweises auf die Patenterteilung: **19.02.2025**
(21) Anmeldenummer: 18162213.5
(22) Anmeldetag: 16.03.2018
(51) Int. Cl.: G01V 8/14

(54) **SENSORANORDNUNG**
SENSOR ASSEMBLY
SYSTÈME DE DÉTECTION

(43) Veröffentlichungstag der Anmeldung: 18.09.2019
(73) Patentinhaber: Leuze electronic GmbH + Co. KG, 73277 Owen/Teck (DE)
(72) Erfinder: ALDIEK, Norbert, 73230 Kirchheim/Teck (DE)
(74) Vertreter: Ruckh, Rainer Gerhard

(56) Entgegenhaltungen:
- WO-A1-01/13144
- DE-A1- 10 029 865
- DE-A1- 19 801 632

## Beschreibung

Die Erfindung betrifft eine Sensoranordnung gemäß dem Oberbegriff des Anspruchs 1.

Bekannte Sensoranordnungen dieser Art sind als Reflexionslichtschranken ausgebildet, die einen an einem ersten Rand eines Überwachungsbereichs angeordneten Sendelichtstrahlen emittierenden Sender, einen Empfangslichtstrahlen empfangenden Empfänger sowie eine Auswerteeinheit aufweisen. Am gegenüberliegenden Rand des Überwachungsbereiches befindet sich ein Reflektor in Form eines Retroreflektors. Der Sender emittiert polarisierte Sendelichtstrahlen, was beispielsweise durch ein dem Sender zugeordnetes Polarisationsfilter erreicht wird. Zudem kann dem Empfänger ein daran angepasstes Polarisationsfilter zugeordnet sein.

Die Objektdetektion erfolgt in der Auswerteeinheit generell durch eine Schwellwertbewertung der Amplituden der Empfangssignale des Empfängers. Bei freiem Überwachungsbereich gelangen die Sendelichtstrahlen ungehindert zum Reflektor und werden dort zumindest teilweise depolarisiert als Empfangslichtstrahlen zurück zum Empfänger geführt, so dass die Amplitude der Empfangssignale oberhalb des Schwellwerts liegt. Tritt ein Objekt in den Überwachungsbereich, werden die Sendelichtstrahlen durch Reflexion an diesem Objekt üblicherweise wenig depolarisiert und im Allgemeinen ungerichtet reflektiert, so dass dann die Amplitude der Empfangssignale unterhalb des Schwellwerts liegt.

Abhängig von dieser Schwellwertbewertung wird in der Auswerteeinheit ein binäres Schaltsignal generiert, dessen Schaltzustände angeben, ob sich ein Objekt im Überwachungsbereich befindet oder nicht.

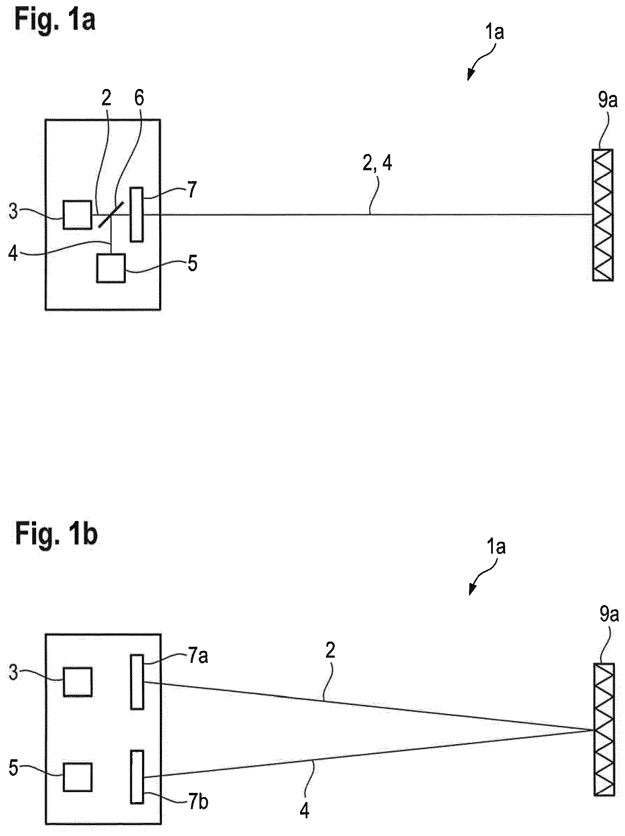

Bekannte Reflexionslichtschranken können zwei unterschiedliche Grundaufbauten aufweisen, die in den Figuren 1a und 1b dargestellt sind.

Figur 1a zeigt eine einlinsige Ausführung einer Reflexionslichtschranke 1a mit einem Sendelichtstrahlen 2 emittierenden Sender 3 und einem Empfangslichtstrahlen 4 empfangenden Empfänger 5. Bei dieser Ausführungsform werden durch einen Strahlteiler 6 die Sendelichtstrahlen 2 und Empfangslichtstrahlen 4 koaxial über eine gemeinsame Sende- und Empfangsoptik 7, das heißt über nur eine Linse, in den Überwachungsbereich geführt.

Figur 1b zeigt eine zweilinsige Ausführung einer Reflexionslichtschranke 1a. Bei dieser Ausführungsform sind der Sender 3 und der Empfänger 5 nebeneinanderliegend angeordnet, so dass die Strahlachsen der Sendelichtstrahlen 2 und der Empfangslichtstrahlen 4 versetzt zueinander verlaufen. Dem Sender 3 ist eine Sendeoptik 7a in Form einer Linse zugeordnet, dem Empfänger 5 ist eine Empfangsoptik 7b in Form einer Linse zugeordnet. Die Linsen liegen in Abstand zueinander, wodurch die zweilinsige Reflexionslichtschranke 1a gebildet ist.

In beiden Fällen ist der Überwachungsbereich von einem Retroreflektor 9a begrenzt.

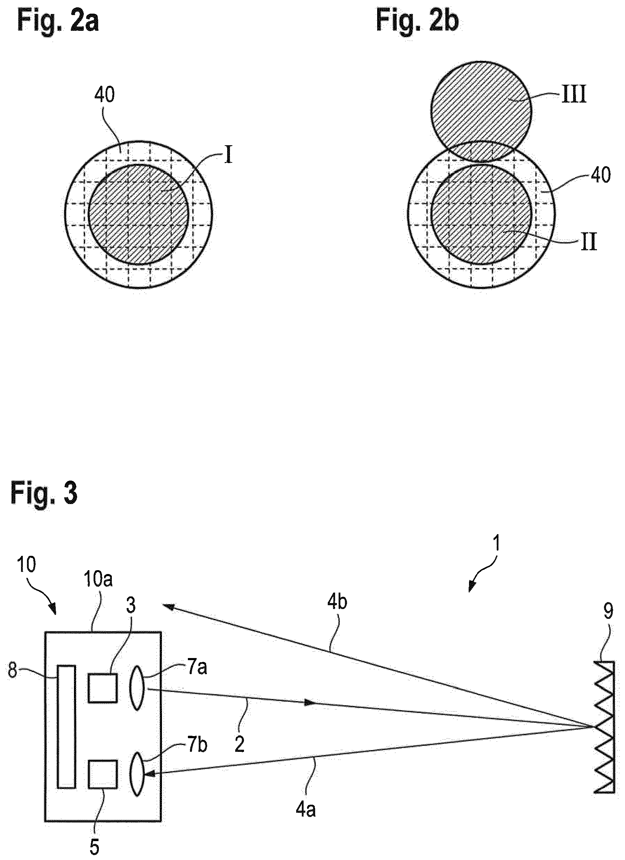

Da die Sendelichtstrahlen 2 am Retroreflektor 9a mit einem nur geringen seitlichen Versatz nahezu in sich selbst als Empfangslichtstrahlen zurückreflektiert werden, wird, wie Figur 2a zeigt, bei der einlinsigen Reflexionslichtschranke 1a der Empfangslichtfleck 40 vollflächig auf die Sende-/Empfangsapertur I der Sende- und Empfangsoptik 7 geführt.

Ein völlig anderes Bild ergibt sich für die zweilinsige Reflexionslichtschranke 1a, wie Figur 2b zeigt. Da die Sendelichtstrahlen bei freiem Überwachungsbereich nur mit einem geringen Versatz als Empfangslichtstrahlen am Retroreflektor 9a zurückreflektiert werden, wird der größte Teil des Empfangslichtflecks 40 auf die Sendeapertur II der Sendeoptik zurückreflektiert, wogegen nur ein kleiner Teil des Empfangslichtflecks 40 auf die Empfangsapertur III trifft. Nur dieser kleine Teil des Empfangslichtflecks 40 steht damit zur Objektdetektion zur Verfügung.

Dies ist insbesondere dann problematisch, wenn mit der Reflexionslichtschranke transparente Gegenstände wie zum Beispiel Getränkeflaschen erkannt werden sollten. Diese transparente Gegenstände können zwar mit einlinsigen Reflexionslichtschranken nicht jedoch zweilinsigen Reflexionslichtschranken relativ gut erfasst werden.

Bei der Detektion von transparenten Gegenständen sind generell folgende Effekte zu beachten. Das Empfangssignal am Empfänger kann einerseits durch Reflexionsverluste an der Oberfläche des transparenten Gegenstands reduziert werden. Materialspannungen im transparenten Gegenstand, insbesondere in Getränkeflaschen, können durch eine zusätzliche Depolarisation das Empfangssignal erhöhen. Auch können lichtablenkende Eigenschaften des transparenten Gegenstands das Empfangssignal erhöhen.

Diese letzten beiden Effekte können bei zweilinsigen Reflexionslichtschranken verstärkt zu Fehldetektionen führen, da bei freiem Überwachungsbereich nur wenig Empfangslicht auf den Empfänger trifft und dieser den freien Überwachungsbereich definierenden Signalpegel durch die empfangssignalerhöhenden Effekte des transparenten Gegenstands leicht überschritten werden kann, so dass dadurch ein freier Überwachungsbereich vorgetäuscht wird.

Dieser Störeffekt kommt bei einlinsigen Reflexionslichtschranken kaum zum Tragen, da dort bei freiem Überwachungsbereich bereits nahezu das gesamte Empfangslicht auf den Empfänger trifft, so dass sich die empfangssignalerhöhenden Effekte eines transparenten Gegenstands nicht spürbar auswirken.

Daher werden zur Detektion von transparenten Gegenstände wie Getränkeflaschen generell einlinsige Reflexionslichtschranken eingesetzt, da mit diesen, im Gegensatz zu zweilinsigen Reflexionslichtschranken, transparente Gegenstände sicher detektiert werden können.

Nachteilig bei einlinsigen Reflexionslichtschranken ist jedoch, dass diese im Vergleich zu zweilinsigen Reflexionslichtschranken einen aufwändigeren Aufbau aufweisen, womit höhere Herstellkosten verbunden sind. Dieser Zusatzaufwand ergibt sich durch den erforderlichen Strahlteiler. Weiterhin werden bei einlinsigen Reflexionslichtschranken Sende- und Empfangsoptiken mit geringen inneren Spannungen benötigt, um ein definiertes Polarisationsverhalten zu gewährleisten. Damit müssen die Sende- und Empfangsoptiken, insbesondere in Form teurer Glaslinsen vorgesehen werden, wogegen bei zweilinsigen Reflexionslichtschranken kostengünstige Kunststofflinsen zum Einsatz kommen können.

Die WO 01/13144 A1 betrifft eine Lichtschrankenanordnung mit mindestens einer Lichtquelle zur Aussendung eines parallelen Strahlenbündels und mindestens einem im Strahlengang des Strahlenbündels angeordneten Detektorelement. Im Strahlengang des Strahlenbündels ist ein Strahlteiler zur Auffächerung des Strahlenbündels in ein scheibenförmiges ebenes oder schalenförmig gekrümmtes Strahlenfeld angeordnet. Das mindestens eine Detektorelement ist innerhalb des Strahlenfelds optisch in Richtung Strahlteiler ausgerichtet.

Die DE 198 01 632 A1 betrifft eine Reflexlichtschranke, insbesondere zum Erkennen transparenter, polarisierender Materialien, bestehend aus einem Sender und Empfänger, welche sich in räumlicher Nähe voneinander befinden, und einem davon beabstandeten Reflektor, wobei die vom Sender emittierten elektromagnetischen Wellen mittels des Reflektors auf den Empfänger reflektiert werden, der ein von der Intensität des empfangenen Lichts abhängiges Ausgangssignal abgibt, das zur Erkennung von in den Bereich zwischen Sender bzw. Empfänger und Reflektor, den Erfassungsbereich, eingebrachten Objekten dient. Vor dem Ausgang des Senders befindet sich ein Polarisator, der einen definierten Polarisationszustand P_{S} herstellt. Alternativ emittiert der Sender polarisiertes Licht der Polarisation P_{S}, wobei sich vor dem Empfänger ein Polarisator befindet, der Licht einer definierten Polarisation P_{E} zum Empfänger durchlässt. Vor dem Reflektor befindet sich ein Polarisator, der vom reflektierten Licht den Polarisationszustand P_{R} durchlässt.

Der Erfindung liegt die Aufgabe zugrunde, eine Sensoranordnung der eingangs genannten Art bereitzustellen, welche bei geringem konstruktivem Aufwand eine sichere Detektion von transparenten Gegenständen ermöglicht.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung zur Erfassung von transparenten Gegenständen in einem Überwachungsbereich, mit einem Sensor an einem ersten Rand des Überwachungsbereichs und mit einem Reflektor an einem dem ersten Rand gegenüberliegendem zweiten Rand des Überwachungsbereichs. Der Sensor weist einen Sendelichtstrahlen emittierenden Sender, einen Empfänger mit einer Empfangsapertur sowie eine Auswerteeinheit zur Auswertung von Empfangssignalen des Empfängers auf. Die Sensoranordnung ist eine zweilinsige

Reflexionslichtschranke, wobei der Sender und der Empfänger in Abstand nebeneinander angeordnet sind. Dem Sender ist eine Sendeoptik und dem Empfänger eine in Abstand zur Sendeoptik angeordnete Empfangsoptik, zugeordnet. Der Reflektor ist als strahlteilender Reflektor ausgebildet. Auf den strahlteilenden Reflektor auftreffende Sendelichtstrahlen werden als Empfangslichtstrahlen derart an diesem reflektiert, dass die Empfangslichtstrahlen in zwei Teilstrahlenbündeln aufgeteilt werden, welche jeweils einen Winkelversatz zu den Sendelichtstrahlen aufweisen. Der strahlteilende Reflektor weist eine Tripelanordnung mit einer Eintrittsfläche auf, welche eine Dachstruktur aufweist, wobei die Tripelanordnung an die Dachstruktur angepasst ist. Die auf die Eintrittsfläche auftreffenden Sendelichtstrahlen treten in die Tripelanordnung ein und reflektieren auf Reflexionsflächen ein Tripel. Auf die Eintrittsfläche auftreffende Sendelichtstrahlen werden an der Dachstruktur so gebrochen, dass die reflektierten Empfangslichtstrahlen in zwei Teilstrahlenbündel aufgeteilt sind. Der strahlteilende Reflektor ist so zum Sensor positioniert, dass bei freiem Überwachungsbereich ein Teilstrahlenbündel auf den Empfänger geführt ist.

Mit der erfindungsgemäßen Sensoranordnung können transparente Gegenstände sicher erfasst werden, wobei die Sensoranordnung hierbei einen einfachen, kostgünstigen Aufbau aufweist.

Die Sensoranordnung entspricht erfindungsgemäß in ihrem Aufbau einer zweilinsigen Reflexionslichtschranke. Der Sender und der Empfänger liegen in Abstand nebeneinander, so dass die Strahlachsen der vom Sender emittierten Sendelichtstrahlen und der auf den Empfänger geführten Empfangslichtstrahlen räumlich versetzt zueinander verlaufen.

Die Sendeoptik und die Empfangsoptik können jeweils aus einer kostengünstig herstellbaren Kunststofflinse bestehen. Zudem sind keine aufwändigen optischen Bauelemente wie Strahlteiler erforderlich.

Ein wesentlicher Bestandteil der Sensoranordnung für die sichere Erkennung von transparenten Gegenständen ist der strahlteilende Reflektor, der die auftreffenden Sendelichtstrahlen in genau zwei Teilstrahlenbündel aufspaltet, die jeweils einen unterschiedlichen Winkelversatz zu den einfallenden Sendelichtstrahlen aufweisen.

Im Gegensatz zu einem Retroreflektor wird bei dem strahlteilenden Reflektor aus den auftreffenden Sendelichtstrahlen durch die Reflexion an der Reflektorfläche nicht ein parallel zu den Sendelichtstrahlen verlaufendes Empfangslichtstrahlenbündel erzeugt, sondern wenigstens zwei Teilstrahlenbündel, die einen Winkelversatz zu den Sendelichtstrahlen aufweisen, das heißt die Teilstrahlenbündel verlaufen jeweils in einem vorgegebenen Winkel zu den Sendelichtstrahlen.

Erfindungsgemäß wird diese Eigenschaft des strahlteilenden Reflektors dazu ausgenutzt, dass der strahlteilende Reflektor so zum Sensor positioniert wird, dass ein Teilstrahlenbündel auf den Empfänger trifft, das heißt die Empfangslichtmenge dieses Teilstrahlenbündels trifft größtenteils auf den Empfänger.

Für den Fall, dass der Empfangslichtfleck größer ist als die Empfangsapertur des Empfängers, leuchtet das bei freiem Überwachungsbereich auf den Empfänger geführte Teilstrahlenbündel die Empfangsapertur des Empfängers vollständig aus.

Für den Fall, dass der Empfangslichtfleck kleiner ist als die Empfangsapertur des Empfängers, trifft das bei freiem Überwachungsbereich auf den Empfänger geführte Teilstrahlenbündel vollständig auf die Auswerteeinheit des Empfängers.

Werden am strahlteilenden Reflektor die Sendelichtstrahlen in genau zwei Teilstrahlenbündel aufgeteilt, ist somit gewährleistet, dass bei freiem Überwachungsbereich 50 % oder nahezu 50 % des am strahlteilenden Reflektor zurückreflektierten Lichts auf den Empfänger trifft. Gegenüber zweilinsigen Reflexionslichtschranken, die mit Retroreflektoren arbeiten, wird somit die auf den Empfänger auftreffende Empfangslichtmenge bei freiem Überwachungsbereich signifikant erhöht.

Damit können mit der erfindungsgemäßen Sensoranordnung, obwohl sie einen zweilinsigen Aufbau aufweist, transparente Gegenstände sicher und zuverlässig erfasst werden.

Dabei wird zur Detektion von transparenten Gegenständen in der Auswerteeinheit eine Amplitudenbewertung der Empfangssignale des Empfängers durchgeführt.

Hierbei werden die Amplituden der Empfangssignale mit einem Schwellwert bewertet. Die Amplituden der Empfangssignale liegen bei freiem Überwachungsbereich oberhalb des Schwellwertes und bei Detektion eines transparenten Gegenstandes unterhalb des Schwellwertes.

Als Ergebnis wird in der Auswerteeinheit in Abhängigkeit der Amplitudenbewertung der Empfangssignale ein binäres Schaltsignal generiert.

Gemäß einer vorteilhaften Ausführungsform arbeitet der Sensor der erfindungsgemäßen Sensoranordnung mit polarisiertem Licht. Hierzu ist dem Sender als Polarisator ein erstes Polarisationsfilter nachgeordnet. Weiterhin ist dem Empfänger als Analysator ein zweites Polarisationsfilter vorgeordnet. Generell sind die Durchlassrichtungen des Analysators und Polarisators um 90° versetzt zueinander. Dabei kann der Sensor mit linear oder mit zirkular polarisiertem Licht arbeiten. Durch diese Anordnung von Polarisationsfiltern können Fehlschaltungen des Sensors bei der Detektion von glänzenden und spiegelnden Objekten vermieden werden.

Da erfindungsgemäß bei freiem Überwachungsbereich die Lichtmenge eines Teilstrahlenbündels vom strahlteilenden Reflektor nahezu vollständig auf den Empfänger geführt wird, wirken sich Effekte eines transparenten Gegenstands, die ansonsten nur einer Erhöhung des auf den Empfänger zurückreflektierten Lichts führen würden, wie zum Beispiel lichtablenkende Eigenschaften oder depolarisierende Eigenschaften, nicht oder nicht so stark aus, dass sie zu einem Anheben der Empfangssignalamplitude über den Schwellwert führen würden, das heißt es erfolgt keine fehlerhafte Beeinflussung des Schaltverhaltens der Sensoranordnung, da durch die Reflexionseigenschaften des transparenten Gegenstands kein freier Überwachungsbereich vorgetäuscht werden kann. Damit aber können transparente Gegenstände fehlerfrei und zuverlässig erfasst werden.

Insbesondere für transparente Gegenstände in Form von rotationssymmetrischen Körpern wie Getränkeflaschen, die mit transparenten Flüssigkeiten befüllt sein können, wird mit der erfindungsgemäßen Sensoranordnung eine zuverlässigere Objektdetektion als mit einer einlinsigen Reflexionslichtschranke erhalten.

Bei einer einlinsigen Reflexionslichtschranke verlaufen die Sende- und Empfangslichtstrahlen bei freiem Überwachungsbereich koaxial. Tritt eine Getränkeflasche in den Überwachungsbereich wird diese mittig, das heißt zentral von den Sendelichtstrahlen erfasst. Bedingt durch Fresnelsche Reflexionsverluste und Transmissionsverluste im Flaschenmaterial ergibt sich nur eine relativ geringe Absenkung des Pegels der Empfangssignale gegenüber dem freien Überwachungsbereich, so dass die Objektdetektion durch Störeinflüsse leicht verfälscht werden kann beziehungsweise allgemein relativ unsicher ist.

Bei der erfindungsgemäßen Sensoranordnung wird jedoch bei freiem Überwachungsbereich ein Teilstrahlenbündel des Empfangslichts mit einem bestimmten Winkelversatz am Reflektor reflektiert, wobei die Komponenten der Sensoranordnung so optimiert beziehungsweise eingestellt sind, dass das Teilstrahlenbündel bei freiem Überwachungsbereich zumindest größtenteils auf den Empfänger trifft. Befindet sich nun eine Getränkeflasche, die insbesondere mit einer transparenten Flüssigkeit befüllt ist, im Überwachungsbereich, so wird der Strahlverlauf des Teilstrahlenbündels durch Brechung an der Getränkeflasche geändert, beziehungsweise die auf die Getränkeflasche auftreffenden Sendelichtstrahlen werden in der Getränkeflasche in einem Winkel zurückreflektiert, der sich vom Winkelversatz des bei freiem Überwachungsbereich am Reflektor zurückreflektierten Teilstrahlenbündels unterscheidet.

Daher wird bei Eintritt der Getränkeflasche in den Überwachungsbereich ein signifikant niedrigerer Pegel des Empfangssignals gegenüber dem Pegel des Empfangssignals bei freiem Überwachungsbereich erhalten. Dies gilt insbesondere auch dann, wenn die Getränkeflasche quer zur Ausbreitungsrichtung der Sendelichtstrahlen verschoben wird, so dass die Sendelichtstrahlen nicht mehr mittig auf die Getränkeflasche treffen.

Im Ergebnis wird für die erfindungsgemäße Sensoranordnung gegenüber einer einlinsigen Reflexionslichtschranke bei einer Flaschendetektion ein höherer Unterschied des Pegels des Empfangssignals gegenüber dem Pegel des Empfangssignals bei freiem Überwachungsbereich erhalten, wodurch eine sicherere Objektdetektion gewährleistet ist.

Der bei der erfindungsgemäßen Sensoranordnung eingesetzte strahlteilende Reflektor weist einen einfachen und kompakten Aufbau auf, so dass dieser rationell und kostengünstig hergestellt werden kann.

Erfindungsgemäß weist der strahlteilende Reflektor eine Eintrittsfläche auf, welche eine Dachstruktur aufweist. Auf der Eintrittsfläche werden auftreffende Sendelichtstrahlen an der Dachstruktur so gebrochen, dass die reflektierten Empfangslichtstrahlen in wenigstens zwei Teilstrahlenbündel aufgeteilt sind.

Der strahlteilende Reflektor weist eine Tripelanordnung auf, an welche die Dachstruktur angepasst ist.

Vorteilhaft sind die Dachstrukturen aus einer Mehrfachanordnung von Dachelementen gebildet, deren Breiten gleich groß wie die der Tripel der Tripelanordnung sind oder nur geringfügig von diesen abweichen.

Wenn die Breiten der Dachelemente den Breiten der Tripel entsprechen und die Dachelemente einen dreieckigen Querschnitt aufweisen, werden mit der so ausgebildeten Dachstruktur zwei Teilstrahlenbündel beidseits der Sendeapertur des Senders generiert.

Wenn die Breiten der Dachelemente dagegen geringfügig größer oder kleiner als die Breiten der Tripel sind, werden bei einem dreieckigen Querschnitt der Dachelemente insgesamt drei Teilstrahlenbündel erzeugt.

Wenn die Breiten der Dachelemente den Breiten der Tripel entsprechen und die Dachelemente keinen dreieckigen sondern mehreckigen, polygonalen Querschnitt aufweisen, werden mit der so ausgebildeten Dachstruktur vier Teilstrahlenbündel erhalten, welche symmetrisch zum Sender liegen.

Diese Beispiele zeigen, dass durch die Vorgabe der Geometrie der Dachelemente die Anzahl und auch die räumlichen Verläufe der generierten Teilstrahlenbündel variabel vorgegeben werden können.

Für die erfindungsgemäße Sensoranordnung ist es besonders günstig, wenn mit dem strahlteilenden Reflektor eine Aufteilung der Sendelichtstrahlen in nur zwei Teilstrahlenbündel erfolgt, da dann bei freiem Überwachungsbereich ein großer Prozentsatz des am strahlteilenden Reflektor reflektierten Lichts zum Empfänger geführt wird.

Die Erfindung wird im Folgenden anhand der Zeichnungen erläutert. Es zeigen:
- Figur 1a, 1b: Schematische Darstellungen von aus dem Stand der Technik vorbekannten Reflexionslichtschranken.
- Figur 2a, 2b: Sende-/Empfangsaperturen für die Reflexionslichtschranken gemäß den Figuren 1a, 1b.
- Figur 3: Ausführungsbeispiel der erfindungsgemäßen Sensoranordnung.
- Figur 4: Darstellungen eines Tripels des strahlteilenden Reflektors für den Sensor gemäß Figur 1:
- 4a: ohne Dachstruktur,
- 4b: mit einem ersten Dachelement als Bestandteil einer Dachstruktur,
- 4c: mit einem zweiten Dachelement als Bestandteil einer Dachstruktur.
- Figur 5: Erste Ausführungsform einer Tripelanordnung eines strahlteilenden Reflektors mit einer Dachstruktur:
- 5a: in einer Querschnittsdarstellung,
- 5b: in einer Draufsicht.
- Figur 6: Zweite Ausführungsform einer Tripelanordnung eines strahlteilenden Reflektors mit einer Dachstruktur:
- 6a: in einer Querschnittsdarstellung,
- 6b: in einer Draufsicht.
- Figur 7: Schematische Darstellung der mit dem strahlteilenden Reflektor generierten Teilstrahlenbündel relativ zu der Sende- und Empfangsapertur der Sensoranordnung gemäß Figur 3 bei optimiertem Abstand zwischen dem Reflektor und dem Sensor.
- Figur 8: Anordnung gemäß Figur 7:
a) bei vergrößertem Abstand zwischen Reflektor und Sensor,
b) bei verkleinertem Abstand zwischen Reflektor und Sensor.

Figur 3 zeigt schematisch ein Ausführungsbeispiel der erfindungsgemäßen Sensoranordnung 1. Die Sensoranordnung 1 weist einen Sensor 10 an einem Rand eines Überwachungsbereichs auf. Am gegenüberliegenden Rand des Überwachungsbereichs befindet sich ein strahlteilender Reflektor 9.

Der Sensor 10 weist ein Gehäuse 10a auf, in dem ein Sendelichtstrahlen 2 emittierender Sender 3 und ein Empfänger 5 angeordnet sind. Dem Sender 3 sind eine Sendeoptik 7a und ein nicht dargestelltes Polarisationsfilter nachgeordnet. Dem Empfänger 5 sind eine Empfangsoptik 7b und ein nicht dargestelltes Polarisationsfilter vorgeordnet. Die Durchlassrichtungen der Polarisationsfilter sind um 90° versetzt zueinander. Das Vorsehen der Polarisationsfilter ist optional und verhindert Fehldetektionen bei Objekten mit glänzenden oder spiegelnden Oberflächen.

Der Sender 3 kann zum Beispiel von einer Leuchtdiode gebildet sein, während der Empfänger 5 von einer Photodiode gebildet sein kann. Die Sende- und Empfangsoptik 7a, 7b bestehen jeweils aus einer Linse, insbesondere einer Kunststofflinse.

Der Sender 3 und der Empfänger 5 sowie die Sendeoptik 7a und die Empfangsoptik 7b liegen jeweils in Abstand zueinander, so dass die optischen Achsen der Sendeoptik 7a und der Empfangsoptik 7b versetzt zueinander sind. Insofern entspricht die Sensoranordnung 1 gemäß Figur 3 der zweilinsigen Reflexionslichtschranke 1a gemäß Figur 1b.

Der Sensor 10 weist weiterhin eine Auswerteeinheit 8 zur Auswertung der am Ausgang des Empfängers 5 anstehenden Empfangssignale auf. Die Auswerteeinheit 8 kann von einem Mikroprozessor oder dergleichen gebildet sein.

In der Auswerteeinheit 8 wird in Abhängigkeit der Empfangssignale des Empfängers 5 ein binäres Schaltsignal generiert, dessen Schaltzustände angeben, ob sich ein Objekt im Überwachungsbereich befindet oder nicht. Dabei werden die Amplituden der Empfangssignale mit einem Schwellwert bewertet. Dabei wird der einem freiem Überwachungsbereich entsprechende Schaltzustand das Schaltsignal erhalten, wenn die Amplitude des Empfangssignals oberhalb des Schwellwerts liegt. Umgekehrt liegt die Amplitude der Empfangssignale unterhalb des Schwellwerts, wenn sich ein Objekt im Überwachungsbereich befindet und die Sendelichtstrahlen 2 des Senders 3 auf dieses Objekt auftreffen.

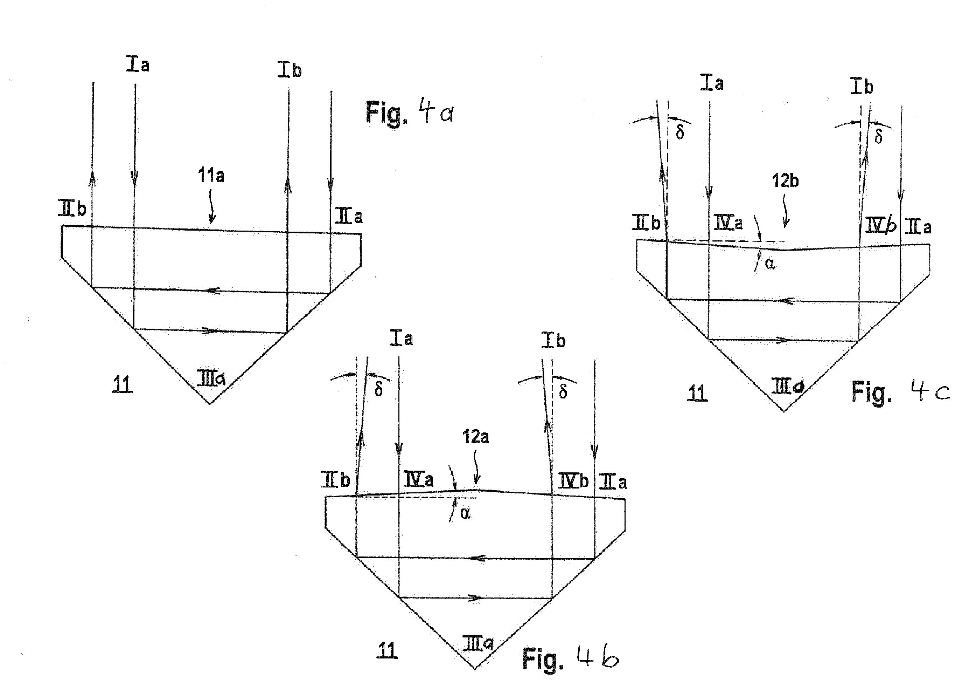

Erfindungsgemäß wird ein strahlteilender Reflektor 9 als Reflektor verwendet, wobei die Figuren 4b, 4c Ausführungsformen des strahlteilenden Reflektors 9 zeigen. Die Ausbildung des erfindungsgemäßen strahlteilenden Reflektors 9 gemäß den Figuren 4b, 4c wird im Folgenden im Vergleich zu einem aus dem Stand der Technik bekannten, in Figur 4a dargestellten Reflektor erläutert.

Figur 4a zeigt schematisch in einer Schnittdarstellung einen Tripel 11 eines aus dem Stand der Technik bekannten Reflektors, der aus einer Mehrfachanordnung derartiger Tripel 11 besteht. Dieser Tripel 11 weist ein ebenes Flächenelement 11a als Eintrittsfläche auf, auf die die Sendelichtstrahlen 2 auftreffen. Die Eintrittsfläche bildet zugleich die Austrittsfläche des Tripels 11 für die Empfangslichtstrahlen. Der Tripel 11 besteht vorzugsweise aus transparentem Kunststoff.

Wie aus Figur 4a ersichtlich, treffen die einfallenden Lichtstrahlen Ia, IIa senkrecht auf die Eintrittsfläche und werden dann an einer ersten Schrägfläche des Tripels 11 reflektiert, so dass sie als Lichtstrahlen IIIa quer abgelenkt werden und dann an der zweiten beziehungsweise dritten Schrägfläche des Tripels 11 nochmals reflektiert werden. Dadurch sind die ausfallenden Lichtstrahlen Ib, IIb parallel versetzt zu den einfallenden Lichtstrahlen Ia, IIa.

Bei den erfindungsgemäßen Tripeln 11 gemäß den Figuren 4b, 4c bildet die Eintritts- beziehungsweise Austrittsfläche ein Dachelement 12a, 12b aus. Bei der Ausführungsform der Figur 4b verlaufen zwei Flächensegmente in einem Winkel α auf eine erhöht liegende zentrale Kante zu, so dass das Dachelement 12a satteldachförmig mit einem dreieckigen Querschnitt ausgebildet ist. Bei der Ausführungsform der Figur 4c verlaufen zwei Flächensegmente in einem Winkel α auf eine vertieft liegende zentrale Kante zu, so dass das Dachelement 12b rinnenförmig mit einem dreieckigen Querschnitt ausgebildet ist.

Die auf die Dachelemente 12a, 12b gemäß den Figuren 4b und 4c auftreffenden Lichtstrahlen Ia, IIa werden an diesen gebrochen, so dass für die austretenden Lichtstrahlen IIb, IVb ein Winkelversatz δ auftritt. Dies führt zu einer Aufspaltung der Empfangslichtstrahlen in zwei Teilstrahlenbündel, welche symmetrisch zur Sendeapertur II liegen.

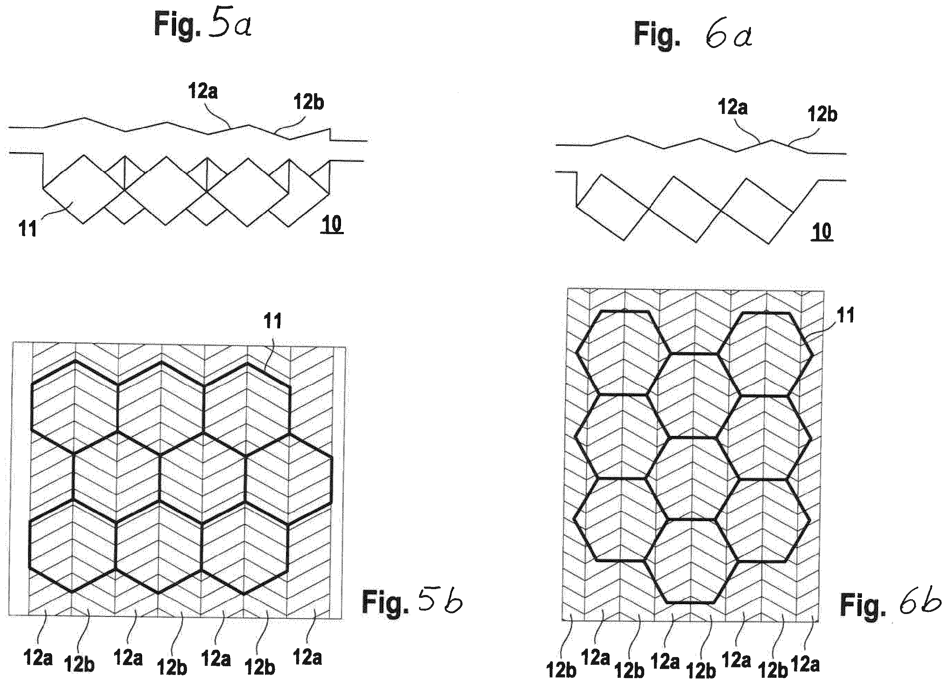

Die Figuren 5a und 5b zeigen eine erste Ausführung eines Reflektors mit einer Dachstruktur, die aus den Dachelementen 12a und 12b bestehen. Die drei Reflexionsflächen eines jeden Einzeltripel seien quadratisch. Die Figuren 6a und 6b zeigen eine weitere Ausführungsform des strahlteilenden Reflektors 9.

Die Figuren 5a und 6a zeigen jeweils einen seitlichen Blick in den strahlteilenden Reflektor 9. Zu erkennen sind die Bereiche der Einzeltripel als auch die oberhalb der Einzeltripel auf der Eintrittsfläche aufgebrachte Dachstruktur. Die Dachelemente 12a sind Flächen mit steigender Flanke, die in den Figuren 5b und 6b durch eine aufsteigende Schraffur dargestellt sind. Die Dachelemente 12b sind Flächen mit fallender Flanke, die in den Figuren 5b und 6b durch eine abfallende Schraffur dargestellt sind. Die Dachelemente 12a und 12b besitzen gleiche Breiten.

Figur 5b zeigt einen senkrechten Blick auf die Eintrittsfläche des strahlteilenden Reflektors 9, der aus drei Reihen mit je drei Tripelprismen 11 besteht. Der Blick zeigt hexagonal begrenzte Einzeltripel, bei der alle drei Flächen in ihrer gesamten Ausdehnung zur Retroreflexion beitragen. Die Breite eines Dachelements 12a zusammen mit der eines benachbarten Dachelementes 12b entspricht der Breite eines einzelnen Tripelprismas. Die zweite Prismenreihe ist zur ersten und dritten Reihe versetzt angeordnet. Die Dachstruktur oberhalb der Einzeltripel der oberen und unteren Prismenreihe besitzt jeweils links eine aufsteigende Flanke und rechts der senkrecht verlaufenden Symmetrieachse der dargestellten hexagonalen Fläche als Dachelement 12b eine abfallende Flanke und entspricht damit einer Ausprägung wie in Figur 4b. Die Dachstruktur oberhalb der Einzeltripel der mittleren Prismenreihe besitzt als Dachelement 12b links eine abfallende Flanke und rechts der Symmetrieachse als Dachelement 12a eine aufsteigende Flanke und entspricht damit einer Ausprägung wie in Figur 4c. Allen Flächenelementen eines jeden Einzeltripel wird links der Symmetrieachse ein anderes Dachelement 12a, 12b als rechts der Symmetrieachse zugeordnet. Eine senkrechte Bestrahlung führt deshalb in Reflexion zu einer Strahlteilung in zwei Strahlenbündel.

Figur 6b zeigt einen senkrechten Blick auf die Eintrittsfläche eines Reflektors, der aus drei Spalten mit je drei Tripelprismen 11 besteht.

Die Breite eines Dachelements 12a zusammen mit der eines benachbarten Dachelementes 12b entspricht dem 0,75^{0,5} - Fachen der Breite eines einzelnen Tripelprismas. Die Dachstruktur oberhalb der Einzeltripel zeigt links im Wesentlichen eine abfallende Flanke und entspricht damit im Wesentlichen einer Ausprägung wie in Figur 4b. Allen Flächenelementen eines jeden Einzeltripel wird links der Symmetrieachse ein anderes Dachelement als rechts der Symmetrieachse zugeordnet. Eine senkrechte Bestrahlung führt deshalb in Reflexion zu einer Strahlteilung in zwei Strahlenbündel.

Durch die Verwendung eines strahlteilenden Reflektors 9 wie in den Figuren 4b, 4c und 5a, 5b, 6a, 6b beschrieben, wird für die Sensoranordnung 1 gemäß Figur 3 der dort dargestellte Verlauf der die Empfangslichtstrahlen 4a, 4b bildenden Teilstrahlenbündel erhalten.

Wie aus Figur 3 ersichtlich, treffen bei freiem Überwachungsbereich die Empfangslichtstrahlen 4a als erstes Teilstrahlenbündel auf den Empfänger 5, nicht jedoch die Empfangslichtstrahlen 4b des zweiten Teilstrahlenbündels.

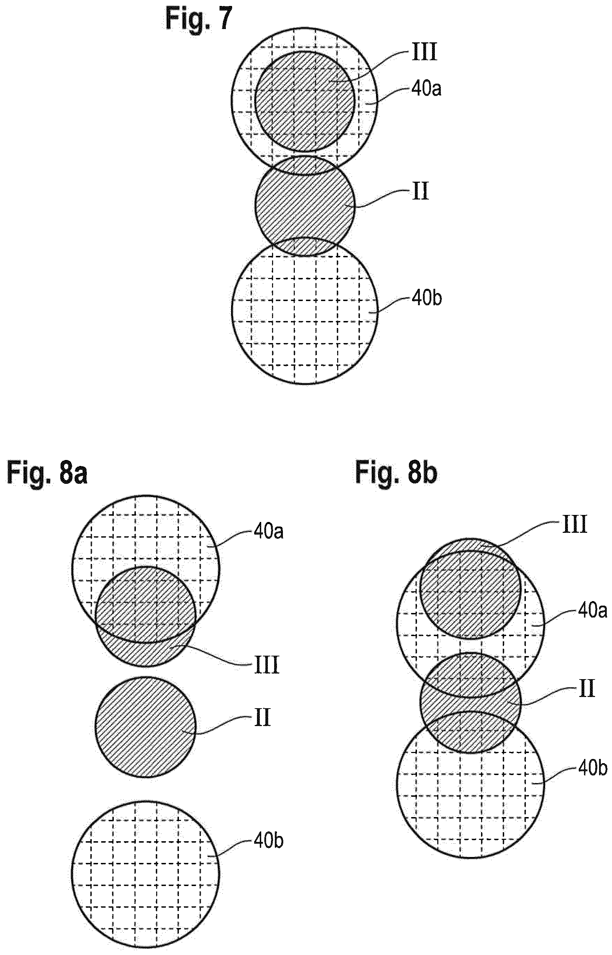

Erfindungsgemäß ist der strahlteilende Reflektor 9 auf den Sensor 10 so abgestimmt, dass die Empfangslichtstrahlen 4a größtenteils auf den Empfänger 5 auftreffen, diesen vorteilhaft komplett ausleuchten. Dies zeigt Figur 7. Durch die strahlteilende Wirkung des strahlteilenden Reflektors 9 werden zwei beidseitig der Sendeapertur II liegende Empfangslichtflecke 40a, 40b erzeugt. Durch die Anpassung des Sensors 10 an den strahlteilenden Reflektor 9 beziehungsweise umgekehrt, wird mit den Empfangslichtstrahlen 4a ein Empfangslichtfleck 40a erzeugt, der die Empfangsapertur III komplett ausleuchtet. Dabei ist der Empfangslichtfleck 40a nur geringfügig größer als die Empfangsapertur III, das heißt der größte Teil des Empfangslichts trifft auf die Empfangsapertur III.

Mit dieser Strahlführung können erfindungsgemäß transparente Gegenstände im Überwachungsbereich sehr sicher und zuverlässig erkannt werden.

Da die Empfangslichtstrahlen 4a bei freiem Überwachungsbereich nahezu vollständig auf die Empfangsapertur III abgebildet werden und somit nur ein kleiner Teil der Empfangslichtstrahlen 4a bei freiem Überwachungsbereich nicht auf den Empfänger 5 trifft, können depolarisierende Eigenschaften oder lichtablenkende Eigenschaften eines transparenten Gegenstands im Überwachungsbereich nicht mehr zu einer starken Erhöhung des Empfangssignals führen, da bereits bei freiem Überwachungsbereich nahezu die gesamte Empfangslichtmenge der Empfangslichtstrahlen 4a auf den Empfänger 5 trifft. Damit aber ist gerade auch für transparente Gegenstände stets gewährleistet, dass bei einem im Überwachungsbereich befindlichen transparenten Gegenstand die Amplitude des Empfangssignals immer unterhalb des Schwellwerts liegt, so dass der transparente Gegenstand als Objekt erkannt wird.

Während Figur 7 die Verhältnisse bei einem optimal eingestellten Abstand zwischen Reflektor 9 und Sensor 10 zeigt, zeigt Figur 8a die Situation bei einem gegenüber dem optimalen Abstand vergrößerten Abstand. Entsprechend zeigt Figur 8b die Situation bei einem verringerten Abstand.

Durch diese Abstandsverstellungen treffen bei den in den Figuren 8a, 8b gezeigten Situationen die Empfangslichtflecke 40a nicht mehr vollständig auf die Empfangsapertur III. Jedoch reicht auch dieser Teil der auf die Empfangsapertur III auftreffenden Empfangslichtflecke 40a noch für eine sichere Detektion von transparenten Gegenständen.

### Bezugszeichenliste

- (1): Sensoranordnung
- (1a): Reflexionslichtschranke
- (2): Sendelichtstrahl
- (3): Sender
- (4): Empfangslichtstrahl
- (4a): Empfangslichtstrahl
- (4b): Empfangslichtstrahl
- (5): Empfänger
- (6): Strahlteiler
- (7): Sende- und Empfangsoptik
- (7a): Sendeoptik
- (7b): Empfangsoptik
- (8): Auswerteeinheit
- (9): strahlteilender Reflektor
- (9a): Retroreflektor
- (10): Sensor
- (10a): Gehäuse
- (11): Tripel
- (12a): Dachelement
- (12b): Dachelement
- (40): Empfangslichtfleck
- (40a): Empfangslichtfleck
- (40b): Empfangslichtfleck
- I: Sende-/Empfangsapertur
- Ia: einfallende Lichtstrahlen
- Ib: ausfallende Lichtstrahlen
- II: Sendeapertur
- IIa: einfallende Lichtstrahlen
- IIb: ausfallende Lichtstrahlen
- III: Empfangsapertur
- IIIa: Lichtstrahlen
- IVa: einfallende Lichtstrahlen
- IVb: austretende Lichtstrahlen

## Patentansprüche

1. Sensoranordnung (1) zur Erfassung von transparenten Gegenständen in einem Überwachungsbereich, mit einem Sensor (10) an einem ersten Rand des Überwachungsbereichs und mit einem Reflektor (9) an einem dem ersten Rand gegenüberliegendem zweiten Rand des Überwachungsbereichs, wobei der Sensor (10) einen Sendelichtstrahlen (2) emittierenden Sender (3), einen Empfänger (5) mit einer Empfangsapertur sowie eine Auswerteeinheit (8) zur Auswertung von Empfangssignalen des Empfängers (5) aufweist, **dadurch gekennzeichnet, dass** die Sensoranordnung (1) eine zweilinsige Reflexionslichtschranke (1a) ist, wobei der Sender (3) und der Empfänger (5) in Abstand nebeneinander angeordnet sind, wobei dem Sender (3) eine Sendeoptik (7a) zugeordnet ist und dem Empfänger (5) eine in Abstand zur Sendeoptik (7a) angeordnete Empfangsoptik (7b) zugeordnet ist, dass der Reflektor (9) als strahlteilender Reflektor (9) ausgebildet ist, wobei auf den strahlteilenden Reflektor (9) auftreffende Sendelichtstrahlen (2) als Empfangslichtstrahlen (4a, 4b) derart an diesem reflektiert werden, dass die Empfangslichtstrahlen (4a, 4b) in zwei Teilstrahlenbündeln aufgeteilt werden, welche jeweils einen Winkelversatz zu den Sendelichtstrahlen (2) aufweisen, dass der strahlteilende Reflektor (9) eine Tripelanordnung mit einer Eintrittsfläche aufweist, welche eine Dachstruktur aufweist, wobei die Tripelanordnung an die Dachstruktur angepasst ist, und wobei die auf die Eintrittsfläche auftreffenden Sendelichtstrahlen in die Tripelanordnung eintreten und auf Reflexionsflächen eines Tripels reflektieren, so dass die auf die Eintrittsfläche auftreffende Sendelichtstrahlen (2) an der Dachstruktur so gebrochen werden, dass die reflektierten Empfangslichtstrahlen (4a, 4b) in zwei Teilstrahlenbündel aufgeteilt sind, und dass der strahlteilende Reflektor (9) so zum Sensor (10) positioniert ist, dass bei freiem Überwachungsbereich ein Teilstrahlenbündel auf den Empfänger (5) geführt ist.

2. Sensoranordnung (1) nach Anspruch 1, **dadurch gekennzeichnet, dass** das bei freiem Überwachungsbereich auf den Empfänger (5) geführte Teilstrahlenbündel die Empfangsapertur des Empfängers (5) größtenteils ausleuchtet.

3. Sensoranordnung (1) nach Anspruch 1, **dadurch gekennzeichnet, dass** das bei freiem Überwachungsbereich auf den Empfänger (5) geführte Teilstrahlenbündel vollständig auf den Empfänger (5) trifft.

4. Sensoranordnung (1) nach einem der Ansprüche 1 bis 3, **dadurch gekennzeichnet, dass** zur Detektion von transparenten Gegenständen in der Auswerteeinheit (8) eine Amplitudenbewertung der Empfangssignale des Empfängers (5) durchgeführt wird.

5. Sensoranordnung (1) nach Anspruch 4, **dadurch gekennzeichnet, dass** die Amplituden der Empfangssignale mit einem Schwellwert bewertet werden, wobei die Amplituden der Empfangssignale bei freiem Überwachungsbereich oberhalb des Schwellwertes und bei Detektion eines transparenten Gegenstandes unterhalb des Schwellwertes liegen.

6. Sensoranordnung (1) nach einem der Ansprüche 4 oder 5, **dadurch gekennzeichnet, dass** in der Auswerteeinheit (8) in Abhängigkeit der Amplitudenbewertung der Empfangssignale ein binäres Schaltsignal generiert wird.

7. Sensoranordnung (1) nach einem der Ansprüche 1 bis 6, **dadurch gekennzeichnet, dass** der Sender (3) polarisierte Sendelichtstrahlen (2) emittiert.

8. Sensoranordnung (1) nach Anspruch 7, **dadurch gekennzeichnet, dass** dem Sender (3) und dem Empfänger (5) jeweils ein Polarisationsfilter zugeordnet ist.

## Claims

1. A sensor assembly (1) for detecting transparent objects in a monitoring area, having a sensor (10) at a first edge of the monitoring area and having a reflector (9) at a second edge of the monitoring area opposite the first edge, the sensor (10) having a transmitter (3) emitting transmitted light beams (2), a receiver (5) with a receiving aperture and an evaluation unit (8) for evaluating received signals from the receiver (5), **characterised in that** the sensor assembly (1) is a two-line retro-reflective light barrier (la), the transmitter (3) and the receiver (5) being arranged at a distance from one another, **in that** the sensor assembly (1) is a two-line retro-reflective light barrier (la), the transmitter (3) and the receiver (5) being arranged at a distance next to one another, a transmitting optical system (7a) being assigned to the transmitter (3) and a receiving optical system (7b) arranged at a distance from the transmitting optical system (7a) being assigned to the receiver (5), **in that** the reflector (9) is designed as a beam-dividing reflector (9), wherein transmitted light beams (2) impinging on the beam-dividing reflector (9) are reflected as received light beams (4a, 4b) are reflected at the beam-dividing reflector (9) in such a way that the received light beams (4a, 4b) are divided into two partial beams which each have an angular offset relative to the transmitted light beams (2), **in that** the beam-dividing reflector (9) has a triple assembly with an entrance surface which has a roof structure, the triple assembly being adapted to the roof structure, and wherein the transmitted light beams impinging on the entry surface enter the triple assembly and are reflected on reflection surfaces of a triple, so that the transmitted light beams (2) impinging on the entry surface are refracted at the roof structure in such a way that the reflected received light beams (4a, 4b) are divided into two partial beams, and that the beam-dividing reflector (9) is positioned relative to the sensor (10) in such a way that when the monitoring area is free, a partial beam is guided onto the receiver (5).

2. A sensor assembly (1) according to claim 1, **characterised in that** the partial beam guided onto the receiver (5) when the monitoring area is free largely illuminates the receiving aperture of the receiver (5).

3. A sensor assembly (1) according to claim 1, **characterised in that** the partial beam guided onto the receiver (5) when the monitoring area is free strikes the receiver (5) completely.

4. A sensor assembly (1) according to one of claims 1 to 3, **characterised in that** an amplitude evaluation of the received signals of the receiver (5) is carried out in the evaluation unit (8) for the detection of transparent objects.

5. A sensor assembly (1) according to claim 4, **characterised in that** the amplitudes of the received signals are evaluated with a threshold value, the amplitudes of the received signals being above the threshold value when the monitoring area is free and below the threshold value when a transparent object is detected.

6. A sensor assembly (1) according to one of claims 4 or 5, **characterised in that** a binary switching signal is generated in the evaluation unit (8) as a function of the amplitude evaluation of the received signals.

7. A sensor assembly (1) according to one of claims 1 to 6, **characterised in that** the transmitter (3) emits polarised transmitted light beams (2).

8. A sensor assembly (1) according to claim 7, **characterised in that** the transmitter (3) and the receiver (5) are each assigned a polarisation filter.

## Revendications

1. Système de détection (1) pour détecter des objets transparents dans une zone de surveillance, comportant un capteur (10) sur un premier bord de la zone de surveillance et un réflecteur (9) sur un second bord de la zone de surveillance opposé au premier bord, le capteur (10) comportant un émetteur (3) émettant des faisceaux lumineux transmis (2), un récepteur (5) avec une ouverture de réception et une unité d'évaluation (8) pour évaluer les signaux reçus du récepteur (5), **caractérisé en ce que le** système de détection (1) est une barrière photoélectrique rétroréfléchissante à deux lignes (la), l'émetteur (3) et le récepteur (5) sont éloignés l'un de l'autre, **en ce que** le système de détection (1) est une barrière lumineuse rétroréfléchissante (la) à deux lignes, l'émetteur (3) et le récepteur (5) étant éloignés l'un de l'autre, un système optique de transmission (7a) étant affecté à l'émetteur (3) et un système optique de réception (7b) disposé à distance du système optique de transmission (7a) étant affecté au récepteur (5), le réflecteur (9) étant conçu comme un réflecteur de division de faisceau (9), dans lequel les faisceaux lumineux transmis (2) frappant le réflecteur de division de faisceau (9) sont réfléchis en tant que faisceaux lumineux reçus (4a, 4b) sur le réflecteur de division de faisceau (9) de telle sorte que les faisceaux lumineux reçus (4a, 4b) sont divisés en deux faisceaux partiels qui ont chacun un décalage angulaire par rapport aux faisceaux lumineux transmis (2), dans lequel le réflecteur de division de faisceau (9) présente un triple système avec une surface d'entrée qui a une structure de toit, le triple système étant conçu pour la structure de toit, et dans lequel les faisceaux lumineux transmis arrivant sur la surface d'entrée pénètrent dans le triple système et sont réfléchis sur les surfaces de réflexion d'un triple, de sorte que les faisceaux lumineux transmis (2) arrivant sur la surface d'entrée sont réfractés au niveau de la structure du toit de telle sorte que les faisceaux lumineux reçus réfléchis (4a, 4b) sont divisés en deux faisceaux partiels, et que le réflecteur de division de faisceau (9) est positionné par rapport au capteur (10) de telle sorte que lorsque la zone de surveillance est libre, un faisceau partiel est guidé vers le récepteur (5).

2. Système de détection (1) selon la revendication 1, **caractérisé par le fait que** le faisceau partiel guidé vers le récepteur (5) lorsque la zone de surveillance est libre illumine largement l'ouverture de réception du récepteur (5).

3. Système de détection (1) selon la revendication 1, **caractérisé par le fait que** le faisceau partiel guidé vers le récepteur (5) lorsque la zone de surveillance est libre frappe complètement le récepteur (5).

4. Système de détection (1) selon l'une des revendications 1 à 3, **caractérisé par le fait qu'**une évaluation de l'amplitude des signaux reçus du récepteur (5) est effectuée dans l'unité d'évaluation (8) pour la détection d'objets transparents.

5. Système de détection (1) selon la revendication 4, **caractérisé en ce que** les amplitudes des signaux reçus sont évaluées par rapport à une valeur seuil, les amplitudes des signaux reçus étant supérieures à la valeur seuil lorsque la zone de surveillance est libre et inférieures à la valeur seuil lorsqu'un objet transparent est détecté.

6. Système de capteur (1) selon l'une des revendications 4 ou 5, **caractérisé par le fait qu'**un signal de commutation binaire est généré dans l'unité d'évaluation (8) en fonction de l'évaluation de l'amplitude des signaux reçus.

7. Système de détection (1) selon l'une des revendications 1 à 6, **caractérisé par le fait que** l'émetteur (3) émet des faisceaux de lumière transmis polarisés (2).

8. Système de détection (1) selon la revendication 7, **caractérisé par le fait que** l'émetteur (3) et le récepteur (5) sont chacun dotés d'un filtre de polarisation.
